# EUROPEAN PATENT APPLICATION

(11) **EP 4 345 290 A1**
(43) Date of publication of application: **03.04.2024**
(21) Application number: 22382884.9
(22) Date of filing: 27.09.2022
(51) Int. Cl.: F03D 13/10, B66C 23/20, B66C 23/32, E04H 12/34

(54) **LIFTING SYSTEM FOR A WIND TURBINE ASSEMBLY SYSTEM AND RELATED LIFTING METHOD**

(71) Applicant: Nordex Energy Spain, S.A.U., 31395 Barasoain (Navarra) (ES)
(72) Inventor: GARCÍA MAESTRE, Iván, BARASOAIN (NAVARRA) (ES); CALDERÓN, Iñigo, BARASOAIN (NAVARRA) (ES); ALVAREZ YOLDI, Javier, BARASOAIN (NAVARRA) (ES); SOLLA FREIJOMIL, Eugenio Luis, BARASOAIN (NAVARRA) (ES); BLANCO DIEGUEZ, Jose Luis, BARASOAIN (NAVARRA) (ES); ÁLVARO GUTIÉRREZ, Pablo, MADRID (ES); CARRILLO ALONSO, Luis, MADRID (ES); BIEDMA GARCÍA, Manuel, MADRID (ES); RUPPEN CAÑÁS, Francisco José, PONTEVEDRA (ES)
(74) Representative: Pons Ariño, Angel

(57) **Abstract**

The present invention can be included in the technical field of lifting systems for a wind turbine assembly system, wherein the lifting system for wind turbine assembly system of the present invention proposes an alternative to lifting systems using climbing cranes that can only be disposed in an upper position once a tower section has been assembled in said upper position. An additional object of the invention is also a lifting method for a wind turbine assembly system.

## Description

### OBJECT OF THE INVENTION

The present invention can be included in the technical field of lifting systems for a wind turbine assembly system.

The lifting system a for wind turbine assembly system of the present invention proposes an alternative to lifting systems using climbing cranes that can only be disposed in an upper position once a tower section has been assembled in said upper position.

An additional object of the invention is also a lifting method for a wind turbine assembly system.

### BACKGROUND OF THE INVENTION

The increase in the rated power of wind turbines entails the increase in weights and dimensions of all the turbine components in general, but the following aspects are of special relevance for the assembly costs:
- The height of the tower;
- Diameter of the rotor and weight of the blades-hub unit;
- Weight of the nacelle and subcomponents;
- Weight of the tower sections.

Of the above, the most relevant is the height of the tower, existing already designs of 120 m and more, especially for the assembly of relatively voluminous and heavy components such as the aforementioned: the large overturning moments associated to the increase in height make it necessary to have a high capacity crane. Usually, conventional cranes supported on the ground like mobile crawler cranes are used and tower cranes -which have been introduced recently as an alternative to the previously mentioned ones- are used for the erection of wind turbines.

Mobile crawler cranes have been the standard solution for the installation of the latest generation of turbines, with a tower height in a range up to 120m. This type of crane can be moved fully assembled between positions under certain assumptions (such as a very low road longitudinal slope and minimum road width of more than 6m). However, if the crane has to be dismantled, a substantial area for the boom assembly and disassembly process will be needed.

Tower cranes provide safe erection of wind turbines with hub heights of 110m or more in low-wind areas. Wind turbines can therefore be erected with wind speeds of up to 18m/s. However, there is a lack of experience of the operators with these new set of cranes and low offer worldwide, as well as uncertainty on the actual installation rates due to insufficient track record; Also, real installation costs are still unknown.

Both solutions, mobile crawler cranes and tower cranes, are limited to heights above 120m not being possible to carry out the assembly of wind turbines up to 180m.

The high costs and the described drawbacks justify the search for alternative means to build wind turbines, including the tower.

Other references as well as the conventional cranes described above are known in the state of the art related to two types of solution:
- Self-climbing systems (understanding as such structures that are supported and raised throughout the tower);
- Bridge-crane type solutions supported on lattices on the ground.

Among the climbing solutions, patent US6868646B2 is known regarding a method and means for erecting a wind turbine tower.

Said means incorporate two structures: a lower one, whereto a hoist cable is fastened at a point close to the lower part, and an upper one, which supports the bridge crane-type structure. The hoist cable passes through a pulley fastened to a suitable fastening point in the tower close to the upper part of each section and it is wound in a winch located on the ground.

The system goes up and down the tower every time a section is assembled. Then, once it has been assembled on top of the lower sections of the tower, the unit is lowered, another section is fastened and it is hoisted again. The lower structure incorporates a wheel/roller system adapted to cooperate with guides situated in the tower.

The self-climbing structures can be light and have reduced dimensions, as they use as support of the weight of the assembled components the tower (or the part of the tower already assembled).

However, the self-climbing structures by pulleys, jacks or similar require some kind of guiding of the structure over the tower to guarantee that there is no interference with the tower during the lifting of the structure. In the case of a conical tower, a typical design of concrete is used, the guiding system becomes complicated, as it requires a spring-type element to guarantee the compression of wheels or rollers on the tower surface and avoid said interference. Alternatively, the climbing is performed by friction between a mechanism disposed on the structure and the tower. In this case, it is again required that the mechanism is capable of adapting to the tower's conical shape.

Furthermore, the lattice-based structures are large structures that will require a large number of trucks for their transport. They have the advantage, compared with climbing solutions, that they can be used with any type of tower without the need to vary their design, since it is not necessary to provide them with additional fastening points or supports to fasten the climbing structure.

The lifting system for wind turbine assembly system of the present invention solves all the previous drawbacks reducing the costs associated to the assembling of the wind turbine.

### DESCRIPTION OF THE INVENTION

The lifting system for wind turbine assembly system of the present invention relates to a lifting system for wind turbine assembly system, the wind turbine comprising:
- a foundation;
- a tower which in turn comprises a height, at least a first tower section comprising an adapter, and optionally a second tower section; and
- at least one wind turbine component and optionally at least one additional wind turbine component;
   wherein the adapter is disposed in the upper part of the first tower section and below the second tower section or disposed in the upper part of the first
   tower section and below the at least one wind turbine component; and
   wherein the wind turbine assembly system comprises:
   - a first lifting structure configured to lift the first tower section, wherein the first lifting structure is supported on a ground next to the foundation;
   - lifting means configured to lift a second lifting structure to a first position located at a first height along the height of the tower;
   - attaching means configured to attach the second lifting structure at least to the first tower section and fix the second lifting structure in the first position;
   - the second lifting structure, wherein the second lifting structure is configured to lift the second tower section or the at least one wind turbine component fixed in the first position; and
   wherein the lifting system comprises:
   - the lifting means configured to lift the second lifting structure to the first position located at the first height along the height of the tower;
   - guiding means configured to guide the second lifting structure along the first tower section;
   - the attaching means configured to attach the second lifting structure at least to the first tower section and fix the second lifting structure in the first position.

In this way, the second lifting structure once attached to the first tower section and supported by it being fixed in the first position is used for the assembly of a lightweight second tower section or at least one wind turbine component which can be part of a subset of wind turbine components.

The first tower section then serves as the supporting structure for the second lifting structure that then bears the loads related to the weight of the second lifting structure and the ones arising during the lifting and assembly of the second tower section or the at least one wind turbine component. This second lifting structure can therefore be a light structure compared to the first one.

Due to this, the lifting system of the present invention is capable of performing the lifting of the second lifting structure to the first position located at the first height along the height of the tower in a single lifting operation, preferably directly from the ground to the first position without any intermediate connections of the second lifting structure to the first tower section. This is differentiating and very advantageous in terms of time (by reducing the number of tower connection operations) and tower cost, as each intermediate connection would increase the cost of the second lifting structure, as local reinforcements and extra material are required in these connection zones. When lifting the second lifting structure to a first position located at a first height along the height of the tower, the first position defines a position from where the second lifting structure can be used to lift and assemble the rest of the sections and/or wind turbine components until the whole wind turbine is assembled.

In a first embodiment, the tower is a "full concrete" tower and the first height is approximately the height of the first tower section and the second lifting structure lifts the rest of wind turbine components located above the first tower section until the whole wind turbine is assembled.

In a second embodiment, the tower is a "concrete-steel hybrid" tower comprising a first tower section comprising at least two concrete segments and further comprising a second tower section made of steel, wherein the first height is approximately the height of the first tower section and the second lifting structure lifts the second tower section and the at least one turbine component being part of a subset of wind turbine components for assembling the whole wind turbine.

Optionally, the lifting means configured to lift the second lifting structure to the first position along the height of the tower comprise a first auxiliary lifting structure disposed on the first tower section, preferably on the adapter, a second auxiliary lifting structure disposed on the second lifting structure and a third auxiliary lifting structure disposed on the ground or in a substructure disposed on the ground, and hoisting means configured to connect the first, the second and the third auxiliary lifting structures. Preferably, the third auxiliary lifting structure comprises a winch configured to pull in the hoisting means, preferably being mooring ropes, to lift the second lifting structure along the first tower section till the first position.

Optionally, the lifting means comprises the first auxiliary lifting structure disposed in the first tower section, preferably on the adapter, or on the second tower section,

Therefore, the loads related to the weight of the second lifting structure during the lifting and assembly of said second lifting structure are also supported by the first tower section since the first auxiliary lifting structure of the lifting means is disposed on the first tower section, preferably on the adapter belonging to the first tower section.

Optionally, the attaching means configured to attach the second lifting structure at least to the first tower section and fix the second lifting structure in the first position are configured to attach the second lifting structure at least to the first tower section between two concrete segments of the first tower section.

In particular, the attaching means configured to attach the second lifting structure at least to the first tower section and fix the second lifting structure in the first position are further configured to attach the second lifting structure at least to the first tower section between two concrete segments of the first tower section, so that there is a second attachment location along the height of the first tower section, one attachment point to the adapter and another attachment point in a location lower than the adapter between two concrete segments for further stability of the second lifting structure.

Optionally, the system further comprises attaching means configured to attach the second lifting structure at least to the second tower section (in particular to an upper end of the second tower section). In this way, the second lifting structure is fixed in the first position but there is a further attachment point to the upper end of the second tower section so that the uppermost movements of the second lifting structure are similar to the movements of the upper end of the second tower section. Thus, the second lifting structure bears the same oscillations as the second section of the wind turbine during the lifting of the at least one wind turbine component, making the operation safer.

Alternatively, the attaching means configured to attach the second lifting structure at least to the first tower section and fix the second lifting structure in the first position are also configured to attach the second lifting structure at least to the second tower section and fix the second lifting structure additionally in a second position located at a second height along the height of the tower upper than the first position.

Optionally, the attaching means configured to attach the second lifting structure at least to the first tower section and fix the second lifting structure in the first position are also configured to attach the second lifting structure at least to the second tower section and fix the second lifting structure additionally in a second position located at a second height along the height of the tower upper than the first position.

Optionally, the lifting system further comprises positioning means configured to centre the second lifting structure with the first tower section in the first position in a substantially vertical direction.

Preferably, the positioning means comprise lug nuts which in turn comprise holes disposed on the adapter being antagonist to bolts disposed on the second lifting structure, preferably next to or on the second auxiliary lifting structure, or vice versa. More preferably, the positioning means comprises lug nuts which in turn comprise holes disposed along the first tower section, preferably between two concrete segments, being antagonists to bolts disposed on the second lifting structure, preferably on a lower part of the second lifting structure.

In this way, it is assured that the lifting of the second lifting structure reaches the first position.

Optionally, the guiding means configured to guide the second lifting structure along the first tower section are steerable. In this way, the guiding means can be adapted to the diameter and conicity (in case of a conical first tower section) along the lifting of the second lifting structure.

Optionally, the guiding means further comprises embracing means configured to embrace the first tower section along the lifting of the second lifting structure till the first position. This ensures the lifting of the second lifting structure in an essentially vertical direction along the height of the tower. Preferably, the embracing means are disposed on the second lifting structure. Also preferably, the embracing means are adjustable according to the diameter of the section of the first tower section wherein they are disposed, preferably by means of hydraulic means. Also preferably, the guiding means comprise wheels configured to roll on a tower surface, preferably an external surface of the tower, more preferably an external surface of the first tower section, in cooperation with the embracing means.

The invention also relates to a lifting method for a wind turbine assembly system, wherein the wind turbine comprises:
- a foundation;
- a tower which in turn comprises a height, at least a first tower section comprising an adapter, and a second tower section; and
- at least one wind turbine component and at least one additional wind turbine component;
   wherein the adapter is disposed in the upper part of the first tower section and below the second tower section or disposed in the upper part of the first tower section and below the at least one wind turbine component; and
wherein the wind turbine assembly system comprises:
- a first lifting structure configured to lift the first tower section, wherein the first lifting structure is supported on a ground next to the foundation;
- lifting means configured to lift a second lifting structure to a first position located at a first height along the height of the tower;
- attaching means configured to attach the second lifting structure at least to the first tower section and fix the second lifting structure in the first position;
- the second lifting structure, wherein the second lifting structure is configured to lift the second tower section or the at least one wind turbine component fixed in the first position; and
wherein the lifting method comprises the following steps:
- a step of lifting the second lifting structure to the first position located at the first height along the height of the tower by means of the lifting means;
- a step of guiding the second lifting structure along the first tower section during the step of lifting the second lifting structure to the first position; and
- a step of attaching the second lifting structure at least to the first tower section and fix the second lifting structure in the first position.

Preferably, the step of lifting the second lifting structure to the first position located at the first height along the height of the tower by means of the lifting means comprises the following steps:
- a step of positioning the lifting means disposing a first auxiliary lifting structure on the first tower section, preferably on the adapter, a second auxiliary lifting structure on the second lifting structure and a third auxiliary lifting structure on the ground or in a substructure disposed on the ground, and connecting the first, the second and the third auxiliary lifting structures by means of hoisting means;
- wherein the step of guiding the second lifting structure along the first tower section during the step of lifting the second lifting structure to the first position comprises a step of embracing the first tower section along the lifting of the second lifting structure till the first position by means of the second lifting structure;
- a step of positioning the second lifting structure with the first tower section in the first position in a substantially vertical direction.

Optionally, the step of lifting the second lifting structure to the first position located at the first height along the height of the tower by means of the lifting means further comprises the following steps between the steps of positioning the lifting means and the step of embracing:
- a step of displacing the second auxiliary lifting structure on the second lifting structure towards the centre of gravity of the second lifting structure being in a substantially horizontal position;
- a step of erecting the second lifting structure from the substantially horizontal position to a substantially vertical position on the ground next to the first tower section by means of the lifting means;
- a step of displacing the second auxiliary lifting structure on the second lifting structure towards a lifting position.

This reduces the loads during the erection of the second lifting structure from the substantially horizontal position to the substantially vertical position on the ground next to the first tower section.

Preferably, in the step of embracing the first tower section along the lifting of the second lifting structure till the first position by means of the second lifting structure, the second lifting structure is adjusted according to the diameter of the section of the first tower section wherein the second lifting structure is disposed.

Optionally, the step of lifting the second lifting structure to the first position located at the first height along the height of the tower by means of the lifting means is carried out pulling in the hoisting means by means of the third auxiliary structure.

Preferably, the lifting method further comprises a step of descending the second lifting structure from the first position located at the first height along the height of the tower to the ground by means of the lifting means.

It is also disclosed here the wind turbine comprising a tower which in turn comprises a height, at least a first tower section comprising an adapter, optionally a second tower section, at least one wind turbine component and optionally at least one additional wind turbine component;
wherein the adapter is disposed in the first tower section, preferably in the upper part of the first tower section and below the second tower section or preferably in the upper part of the first tower section and below the at least one wind turbine component, and the adapter comprises:
- attaching means configured to attach a lifting structure at least to the first tower section and fix the lifting structure in a first position along the height of the tower;
- positioning means configured to centre the lifting structure with the first tower section in the first position; and
- a first auxiliary lifting structure configured to lift the lifting structure to the first position along the height of the tower.

### DESCRIPTION OF THE DRAWINGS

To complement the description being made and for the sake of a better understanding of the characteristics of the invention according to a preferred practical embodiment thereof, attached as an integral part of said description are a set of drawings wherein, for the purpose of illustration and not limiting the scope of the invention, the following is shown:
Figure 1 shows the first lifting structure configured to lift the first tower section wherein the second lifting structure of the wind turbine assembly system is to be attached.
Figure 2 shows a perspective view of the second lifting structure of the wind turbine assembly system to be lifted with the lifting system of the present invention.
Figure 3 shows a detail A of Figure 2.
Figure 4 shows a detail B of Figure 2.
Figure 5 shows a perspective view of the first auxiliary lifting structure of the lifting means disposed on the adapter of the first tower section.
Figure 6 shows a perspective view of the holes disposed on lug nuts disposed between two concrete segments of the first tower section, acting as positioning means.

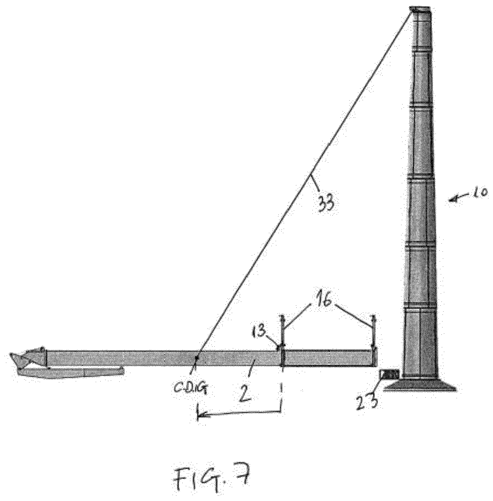

Figure 7 shows a front view of the step of displacing the second auxiliary lifting structure on the second lifting structure towards the centre of gravity of the second lifting structure being in a substantially horizontal position, of the lifting method of the present invention.

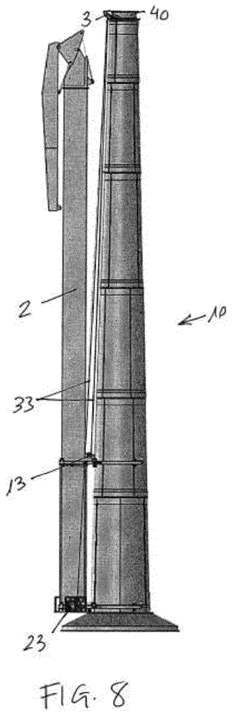

Figure 8 shows a front view once carried out the step of erecting the second lifting structure from the substantially horizontal position to a substantially vertical position on the ground next to the first tower section by means of the lifting means, of the lifting method of the present invention.

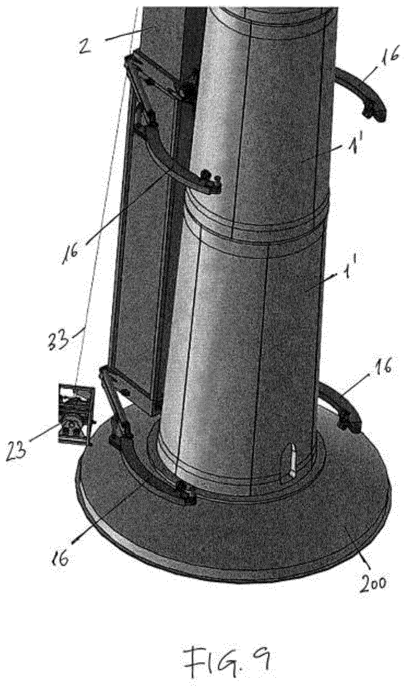

Figure 9 shows a perspective view of the Figure 8.
Figure 10 shows a front view at the beginning of the step of embracing the first tower section along the lifting of the second lifting structure till the first position by means of the second lifting structure, of the lifting method of the present invention.
Figure 11 shows a front view of the step of attaching the second lifting structure at least to the first tower section and fix the second lifting structure in the first position, after the step of positioning the second lifting structure with the first tower section in the first position in a substantially vertical direction, of the lifting method of the present invention.

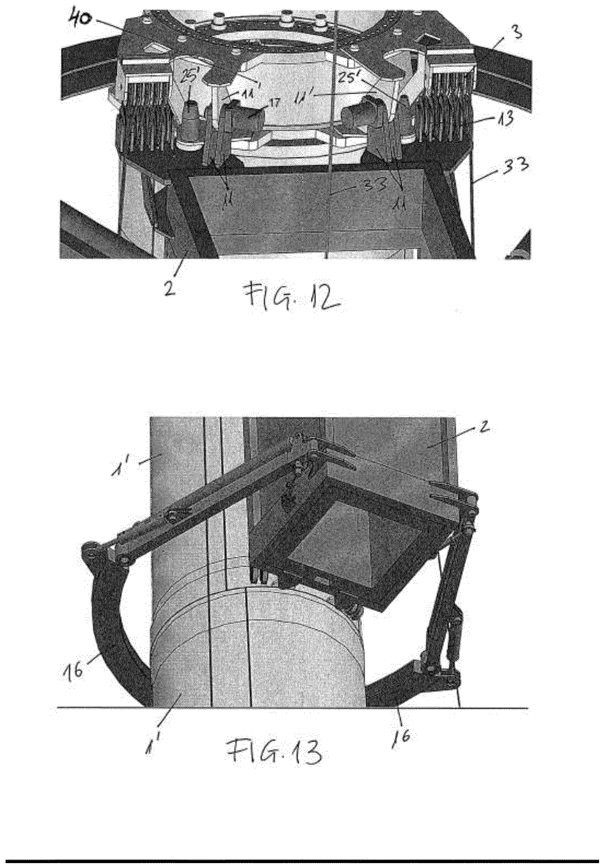

Figure 12 shows a top perspective view of the Figure 11.
Figure 13 shows a bottom perspective view of Figure 11.

### DETAILED DESCRIPTION OF THE INVENTION

The following is a detailed description of the lifting system for wind turbine assembly system of the present invention, wherein the wind turbine comprises:
- a foundation (200);
- a tower (100) which in turn comprises a height, at least a first tower section (10) comprising an adapter (40), and optionally a second tower section (20); and
- at least one wind turbine component (30) and optionally at least one additional wind turbine component (50);
   wherein the adapter (40) is disposed in the upper part of the first tower section and below the second tower section (20) or disposed in the upper part of the first tower section (10) and below the at least one wind turbine component (30); and
wherein the wind turbine assembly system comprises:
- a first lifting structure (1) configured to lift the first tower section (10), wherein the first lifting structure (1) is supported on a ground next to the foundation;
- lifting means (3, 13, 23, 33) configured to lift a second lifting structure (2) to a first position (P1) located at a first height (H1) along the height of the tower (100);
- attaching means (11, 11', 12, 12', 13) configured to attach the second lifting structure (2) at least to the first tower section (10) and fix the second lifting structure (2) in the first position (P1);
- the second lifting structure (2), wherein the second lifting structure (2) is configured to lift the second tower section (20) or the at least one wind turbine component (30) fixed in the first position (P1); and
wherein the lifting system comprises:
- the lifting means (3, 13, 23, 33) configured to lift the second lifting structure (2) to the first position (P1) located at the first height (H1) along the height of the tower (100);
- guiding means (14) configured to guide the second lifting structure (2) along the first tower section (10);
- the attaching means (11, 11', 12, 12', 13) configured to attach the second lifting structure (2) at least to the first tower section (10) and fix the second lifting structure (2) in the first position (P1).

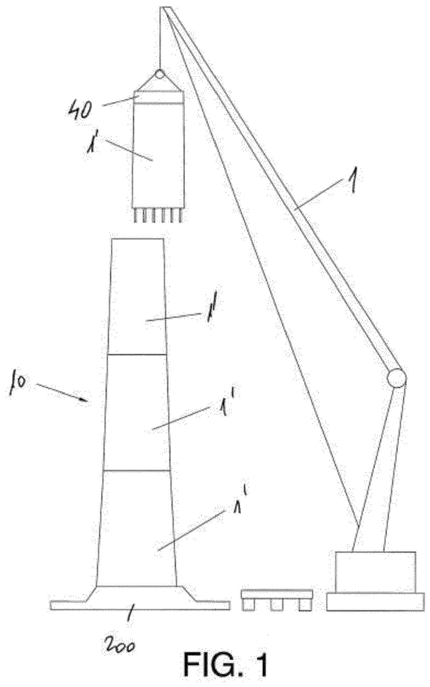

As can be seen in Figure 1, a first lifting structure (1) is configured to lift the first tower section (10), wherein the first lifting structure (1) is supported on a ground next to the foundation. This first tower section (10) defines the first position (P1) located at a first height (H1) along the height of the tower (100) wherein the second lifting structure (2) is lifted. From this first position (P1), the second lifting structure (2) is configured to lift the second tower section (20) or the at least one wind turbine component (30).

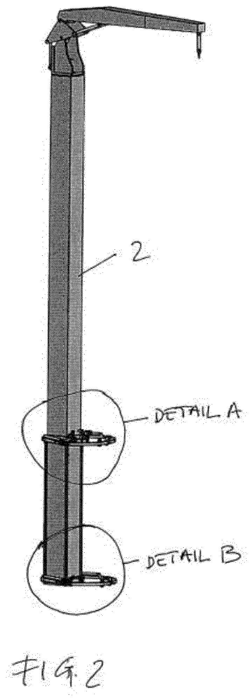

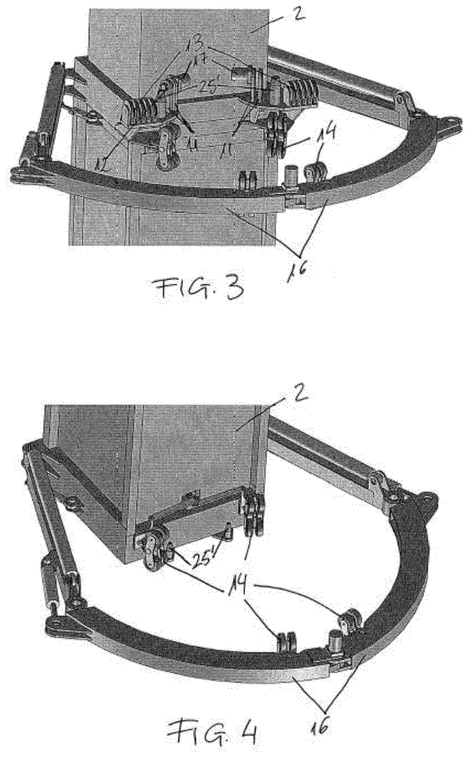

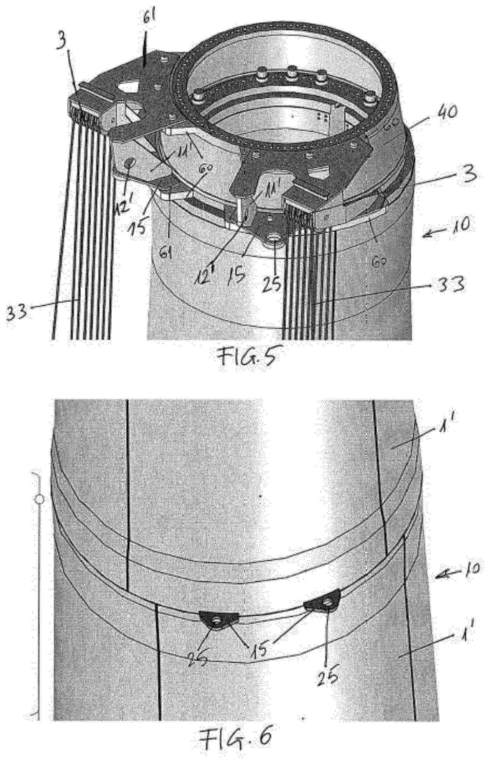

As can be seen in Figures 2 to 4, the second lifting structure (2) comprises:
- a second auxiliary lifting structure (13) of the lifting means (3, 13, 23, 33) (the first auxiliary lifting structure (3) of the lifting means will be described in detail below),
- steerable guiding means (14) configured to guide the second lifting structure (2) along the first tower section (10),
- attaching means (11, 12) configured to attach the second lifting structure (2) at least to the first tower section (10) and fix the second lifting structure (2) in the first position (P1), the attaching means being vertical lug nuts (11) comprising holes (12),
- positioning means (25') being bolts (25') configured to centre the second lifting structure (2) with the first tower section (10) in the first position (P1), since the bolts (25') (shown in Figure 3 and being next to or on the second auxiliary lifting structure (13)) are antagonist to holes (25) disposed on horizontal lug nuts (15) of the adapter (40) (shown in Figure 5) of the first tower section (10) and the bolts (25') (shown in Figure 4) are antagonist to holes (25) disposed on horizontal lug nuts (15) disposed along the first tower section (10) (shown in Figure 6), preferably between two concrete segments (1'), and
- wherein the guiding means (14) configured to guide the second lifting structure (2) along the first tower section (10) comprise adjustable embracing means (16) configured to embrace the first tower section (10) along the lifting of the second lifting structure (2) till the first position (1), preferably by means of hydraulic means.

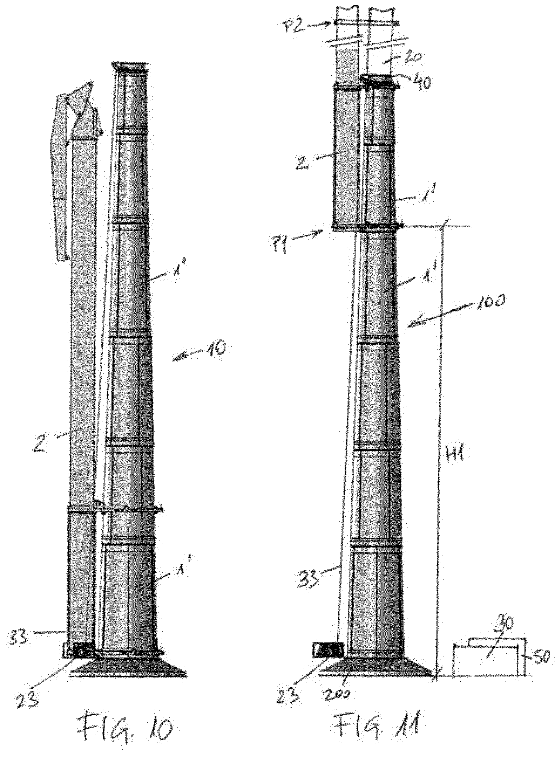

Optionally, the attaching means (11, 11', 12, 12', 13) configured to attach the second lifting structure (2) at least to the first tower section (10) and fix the second lifting structure (2) in the first position (P1) are configured to attach the second lifting structure (2) at least to the first tower section (10) between two concrete segments (1') of the first tower section (10) and fix the second lifting structure (2) in the first position (P1) as shown in Figure 11.

In particular, the attaching means (11, 11', 12, 12', 13) configured to attach the second lifting structure (2) at least to the first tower section (10) and fix the second lifting structure (2) in the first position (P1) are further configured to attach the second lifting structure (2) at least to the first tower section (10) between two concrete segments (1') of the first tower section (10), so that there is a second attachment location along the height of the first tower section (10), one attachment point to the adapter (40) and another attachment point in a location lower than the adapter (40) between two concrete segments (1') for further stability of the second lifting structure (2).

Optionally, the system further comprises attaching means configured to attach the second lifting structure (2) at least to the second tower section (20), in particular to an upper end of the second tower section (20).

Alternatively, the attaching means configured to attach the second lifting structure at least to the first tower section and fix the second lifting structure in the first position are also configured to attach the second lifting structure at least to the second tower section and fix the second lifting structure additionally in a second position located at a second height along the height of the tower upper than the first position.

The first auxiliary lifting structure (3) of the lifting means (3, 13, 23, 33) is disposed on the adapter (40) of the first tower section (10) in this embodiment, wherein the adapter (40) further comprises;
- attaching means (11', 12') configured to attach the second lifting structure (2) at least to the first tower section (10) and fix the second lifting structure (2) in the first position (P1), the attaching means being vertical lug nuts (11') comprising holes (12') parallel to the vertical lug nuts (11) comprising holes (12) disposed on the second lifting structure (2). In the first position (P1), the holes (12') of the vertical lug nuts (11') of the adapter (40) are coincident with the holes (12) of the vertical lug nuts (11) of the second lifting structure (2). Thus, bolts (17) passing through the holes (12, 12') attach the second lifting structure (2) at least to the first tower section (10) and fix the second lifting structure (2) in the first position (P1);
- positioning means (25) being holes (25) configured to centre the second lifting structure (2) with the first tower section (10) in the first position (P1), as explained above for the second lifting structure (2).

Preferably, the adapter is configured to detachably connect the first auxiliary lifting structure (3) of the lifting means (3, 13, 23, 33), the attaching means (11', 12') and the positioning means (25) described in the last paragraph to it.

In this embodiment, the first auxiliary lifting structure (3) comprises two cargo blocks (3) disposed symmetrically with regard to the axis of the first tower section (10) being fixed to the adapter (40) in symmetrical lugs (60) disposed radially on the adapter (40) by means of platens (61). The adapter (40) is further configured to detachably connect the attaching means (11', 12'), preferably a horizontal hole, disposed between the platens (61), and the positioning means (25), preferably vertical holes, also disposed on the platens (61).

It is also disclosed here the wind turbine comprising a tower which in turn comprises a height, at least a first tower section (10) comprising the adapter (40) as described above, optionally a second tower section (20),;
wherein the adapter (40) is disposed in the upper part of the first tower section and below the second tower section (20) or disposed in the upper part of the first tower section (10) and below the at least one wind turbine component (30).

The tower comprises in an embodiment at least one attachment point for the second lifting structure provided in the adapter, more particularly a second attachment point in a location lower than the adapter between two concrete segments for further stability of the second lifting structure so that the attachment points are configured to cooperate with the attaching means of the second lifting structure. Optionally, the tower further comprises a third attachment point for the second lifting structure configured to cooperate with the attaching means to attach the second lifting structure at least to the second tower section (in particular in an upper end of the second tower section). In this way, the second lifting structure is fixed in the first position but there is a further attachment point to the upper end of the second tower section so that the uppermost movements of the second lifting structure are similar to the movements of the upper end of the second tower section.

A third auxiliary lifting structure (23) is disposed on the ground or in a substructure disposed on the ground, wherein the third auxiliary lifting structure (23) comprises a winch (23) configured to pull in hoisting means (33), preferably being mooring ropes, to lift the second lifting structure (2) along the first tower section (10) till the first position (P1).

Thus, the lifting means (3, 13, 23, 33) configured to lift the second lifting structure (2) to the first position (P1) along the height of the tower (100) comprise the first auxiliary lifting structure (3) disposed on the adapter (40) of the first tower section (10), the second auxiliary lifting structure (13) disposed on the second lifting structure (2), the third auxiliary lifting structure (23) disposed on the ground or in a substructure disposed on the ground, and hoisting means (33) configured to connect the first (3), the second (13) and the third (23) auxiliary lifting structures.

The invention also relates to a lifting method for the wind turbine assembly system, wherein the lifting method comprises the following steps:
- a step of lifting the second lifting structure (2) to the first position (P1) located at the first height (H1) along the height of the tower (100) by means of the lifting means (3, 13, 23, 33), preferably by pulling in the hoisting means (33) by means of the third auxiliary structure (23), wherein the step of lifting in turn comprises the following steps:
   - a step of positioning the lifting means (3, 13, 23, 33) disposing a first auxiliary lifting structure (3) on the adapter (40) of the first tower section (10), a second auxiliary lifting structure (13) on the second lifting structure (2) and a third auxiliary lifting structure (23) on the ground or in a substructure disposed on the ground, and connecting the first (3), the second (13) and the third (23) auxiliary lifting structures by means of hoisting means (33);
   - a step of displacing the second auxiliary lifting structure (13) on the second lifting structure (2) towards the centre of gravity (C.D.G) of the second lifting structure (2) being in a substantially horizontal position;
   - a step of erecting the second lifting structure (2) from the substantially horizontal position to a substantially vertical position on the ground next to the first tower section (10) by means of the lifting means (3, 13, 23, 33);
   - a step of displacing the second auxiliary lifting structure (13) on the second lifting structure (2) towards a lifting position;
   - a step of positioning the second lifting structure (2) with the first tower section (10) in the first position (P1) in a substantially vertical direction.
- a step of guiding the second lifting structure (2) along the first tower section (10) during the step of lifting the second lifting structure (2) to the first position (P1) which in turn comprises a step of embracing the first tower section (10) along the lifting of the second lifting structure (2) till the first position (P1) by means of the second lifting structure (2); and
- a step of attaching the second lifting structure (2) at least to the first tower section (10) and fix the second lifting structure (2) in the first position (P1).

Preferably, in the step of embracing the first tower section (10) along the lifting of the second lifting structure (2) till the first position (P1) by means of the second lifting structure (2), the second lifting structure (2) is adjusted according to the diameter of the section of the first tower section (10) wherein the second lifting structure (2) is disposed.

Once the wind turbine is erected the method further comprises a step of descending the second lifting structure (2) from the first position (P1) located at the first height (H1) along the height of the tower (100) to the ground by means of the lifting means (3, 13, 23, 33).

## Claims

1. Lifting system for wind turbine assembly system, the wind turbine comprising:
- a foundation (200);
- a tower (100) which in turn comprises a height, at least a first tower section (10) comprising an adapter (40), and optionally a second tower section (20); and
- at least one wind turbine component (30) and optionally at least one additional wind turbine component (50);
wherein the adapter (40) is disposed in the upper part of the first tower section and below the second tower section (20) or disposed in the upper part of the first tower section (10) and below the at least one wind turbine component (30); and
wherein the wind turbine assembly system comprises:
- a first lifting structure (1) configured to lift the first tower section (10), wherein the first lifting structure (1) is supported on a ground next to the foundation;
- lifting means (3, 13, 23, 33) configured to lift a second lifting structure (2) to a first position (P1) located at a first height (H1) along the height of the tower (100);
- attaching means (11, 11', 12, 12', 13) configured to attach the second lifting structure (2) at least to the first tower section (10) and fix the second lifting structure (2) in the first position (P1);
- the second lifting structure (2), wherein the second lifting structure (2) fixed in the first position is configured to lift the second tower section (20) or the at least one wind turbine component (30); and
wherein the lifting system comprises:
- the lifting means (3, 13, 23, 33) configured to lift the second lifting structure (2) to the first position (P1) located at the first height (H1) along the height of the tower (100);
- guiding means (14) configured to guide the second lifting structure (2) along the first tower section (10);
- the attaching means (11, 11', 12, 12', 13) configured to attach the second lifting structure (2) at least to the first tower section (10) and fix the second lifting structure (2) in the first position (P1).

2. The lifting system of claim 1, wherein the lifting means (3, 13, 23, 33) configured to lift the second lifting structure (2) to the first position (P1) along the height of the tower (100) comprise a first auxiliary lifting structure (3) disposed on the adapter (40) of the first tower section (10), a second auxiliary lifting structure (13) disposed on the second lifting structure (2), a third auxiliary lifting structure (23) disposed on the ground or in a substructure disposed on the ground, and hoisting means (33) configured to connect the first (3), the second (13) and the third (23) auxiliary lifting structures.

3. The lifting system of claim 2, wherein the third auxiliary lifting structure (23) comprises a winch (23) configured to pull in the hoisting means (33), preferably being mooring ropes, to lift the second lifting structure (2) along the first tower section (10) till the first position (P1).

4. The lifting system of any of preceding claims, further comprising positioning means (15, 25, 25') configured to centre the second lifting structure (2) with the first tower section (10) in the first position (P1).

5. The lifting system of claim 4, wherein the positioning means (15, 25, 25') comprise lug nuts (15) which in turn comprise holes (25) disposed on the adapter (40) being antagonist to bolts (25') disposed on the second lifting structure (2), or vice versa.

6. The lifting system of claim 5, wherein the bolts (25') or holes (25) disposed on the second lifting structure (2) are next to or on the second auxiliary lifting structure (13),

7. The lifting system of any of claims 4 to 6 wherein the positioning means (15, 25, 25') further comprises lug nuts (15) which in turn comprise holes (25) disposed along the first tower section (10), being antagonists to bolts (25') disposed on the second lifting structure (2).

8. The lifting system of claim 7, wherein the lug nuts (15) disposed along the first tower section (10) are disposed between two concrete segments (1') and are antagonist to bolts (25') disposed on a lower part of the second lifting structure (2).

9. The lifting system of any of preceding claims, wherein the guiding means (14) configured to guide the second lifting structure (2) along the first tower section (10) are steerable.

10. The lifting system of any of preceding claims further comprising embracing means (16) configured to embrace the first tower section (10) along the lifting of the second lifting structure (2) till the first position (10).

11. The lifting system of claim 10, wherein the embracing means (16) are disposed on the second lifting structure (2).

12. The lifting system of any of claims 10 or 11, wherein the embracing means (16) are adjustable according to the diameter of the section of the first tower section (10) wherein they are disposed, preferably by means of hydraulic means.

13. Lifting method for a wind turbine assembly system, wherein the wind turbine comprises:
- a foundation (200);
- a tower (100) which in turn comprises a height, at least a first tower section (10) comprising an adapter (40), and a second tower section (20); and
- at least one wind turbine component (30) and at least one additional wind turbine component (50);
wherein the adapter (40) is disposed in the upper part of the first tower section and below the second tower section (20) or disposed in the upper part of the first tower section (10) and below the at least one wind turbine component (30); and
wherein the wind turbine assembly system comprises:
- a first lifting structure (1) configured to lift the first tower section (10), wherein the first lifting structure (1) is supported on a ground next to the foundation;
- lifting means (3, 13, 23, 33) configured to lift a second lifting structure (2) to a first position (P1) located at a first height (H1) along the height of the tower (100);
- attaching means (11, 11', 11") configured to attach the second lifting structure (2) at least to the first tower section (10) and fix the second lifting structure (2) in the first position (P1);
- the second lifting structure (2), wherein the second lifting structure (2) is configured to lift the second tower section (20) or the at least one wind turbine component (30) fixed the first position (P1); and
wherein the lifting method comprises the following steps:
- a step of lifting the second lifting structure (2) to the first position (P1) located at the first height (H1) along the height of the tower (100) by means of the lifting means (3, 13, 23, 33);
- a step of guiding the second lifting structure (2) along the first tower section (10) during the step of lifting the second lifting structure (2) to the first position (P1); and
- a step of attaching the second lifting structure (2) at least to the first tower section (10) and fix the second lifting structure (2) in the first position (P1).

14. The lifting method of claim 13, wherein the step of lifting the second lifting structure (2) to the first position (P1) located at the first height (H1) along the height of the tower (100) by means of the lifting means (3, 13, 23, 33) comprises the following steps:
- a step of positioning the lifting means (3, 13, 23, 33) disposing a first auxiliary lifting structure (3) on the adapter (40) of the first tower section (10), a second auxiliary lifting structure (13) on the second lifting structure (2) and a third auxiliary lifting structure (23) on the ground or in a substructure disposed on the ground, and connecting the first (3), the second (13) and the third (23) auxiliary lifting structures by means of hoisting means (33);
- a step of embracing the first tower section (10) along the lifting of the second lifting structure (2) till the first position (P1) by means of the second lifting structure (2);
- a step of positioning the second lifting structure (2) with the first tower section (10) in the first position (P1) in a substantially vertical direction.

15. The lifting method of claim 14, wherein the step of lifting the second lifting structure (2) to the first position (P1) located at the first height (H1) along the height of the tower (100) by means of the lifting means (3, 13, 23, 33) comprises the following steps between the steps of positioning the lifting means (3, 13, 23, 33) and the step of embracing:
- a step of displacing the second auxiliary lifting structure (13) on the second lifting structure (2) towards the centre of gravity (C.D.G) of the second lifting structure (2) being in a substantially horizontal position;
- a step of erecting the second lifting structure (2) from the substantially horizontal position to a substantially vertical position on the ground next to the first tower section (10) by means of the lifting means (3, 13, 23, 33);
- a step of displacing the second auxiliary lifting structure (13) on the second lifting structure (2) towards a lifting position.

16. The lifting method of any of claims 14 or 15, wherein in the step of embracing the first tower section (10) along the lifting of the second lifting structure (2) till the first position (P1) by means of the second lifting structure (2), the second lifting structure (2) is adjusted according to the diameter of the section of the first tower section (10) wherein the second lifting structure (2) is disposed.

17. The lifting method of any of claims 13 to 16, wherein the step of lifting the second lifting structure (2) to the first position (P1) located at the first height (H1) along the height of the tower (100) by means of the lifting means (3, 13, 23, 33) is carried out pulling in the hoisting means (33) by means of the third auxiliary structure (23).

18. The lifting method of any of claims 13 to 17 further comprises a step of descending the second lifting structure (2) from the first position (P1) located at the first height (H1) along the height of the tower (100) to the ground by means of the lifting means (3, 13, 23, 33).
